# EUROPÄISCHE PATENTSCHRIFT

(11) **EP 2 285 517 B1**
(45) Veröffentlichungstag und Bekanntmachung des Hinweises auf die Patenterteilung: **08.02.2012**
(21) Anmeldenummer: 09761432.5
(22) Anmeldetag: 05.06.2009
(51) Int. Cl.: B23B 51/04

(54) **BOHRER**
DRILL
FORET

(30) Priorität: 12.06.2008 DE 102008028060
(43) Veröffentlichungstag der Anmeldung: 23.02.2011
(73) Patentinhaber: Kennametal Inc., Latrobe, PA 15650-0231 (US)
(72) Erfinder: KAUPER, Herbert, Rudolf, 91058 Erlangen (DE); SCHWÄGERL, Jürgen, 92648 Vohenstrauss (DE)
(74) Vertreter: FDST Patentanwälte
(86) Internationale Anmeldenummer: PCT/EP2009/004030
(87) Internationale Veröffentlichungsnummer: WO 2009/149869

(56) Entgegenhaltungen:
- EP-A- 0 089 123
- US-A- 5 443 585
- US-A1- 2008 060 478

## Beschreibung

Die Erfindung betrifft Bohrer mit geraden Spannuten. Ein solcher Bohrer ist aus US 5 443 585 A bekannt. Bohrer mit geraden Spannuten eignen sich insbesondere für die Zerspanung von kurzspanenden Werkstoffen. Die Spannuten dienen bei diesen Bohrern zum Abtransport der Späne.

Bei von Haus aus langspanenden Werkstoffen besteht hingegen das Problem, dass die langen Späne sich über den Verlauf der geraden Spannut zwischen dem Auslauf der Spannut und der sich daran anschließenden Nebenschneide verklemmen. Ein solches Verklemmen ist bei kurzspanenden Werkstoffen hingegen nicht zu beobachten. In der Zerspanungstechnik ist es deshalb seit langem üblich, Bohrer mit gewendelten Nuten einzusetzen. Die Wendelung der Nuten hat dabei die Funktion, die Flussrichtung der Späne gleichsam umzuleiten, um die Späne so innerhalb der Spannut zu brechen. In Folge dieser Spanbrecherfunktion der gewendelten Spannuten entstehen auch bei langspanenden Werkstoffen kurze Späne, die durch die gewendelte Spannut abtransportiert werden können, ohne sich zwischen Spannut und Nebenschneide zu verklemmen.

Nachteilig bei den Werkzeugen mit gewendelter Spannut ist die verminderte Biegesteifigkeit des Bohrers.

Bei den gerade genuteten Bohrern nach dem Stand der Technik weist die Hauptschneide einen ebenso geraden Verlauf auf wie die Spannut. In Folge des identischen Verlaufs von Hauptschneide und Spannut können diese mit Hilfe einer Schleifscheibe in einem Arbeitsgang in das Werkzeug eingeschliffen werden.

Auf dem Gebiet der Bohrer mit wendelförmiger Spannut ist es schließlich bekannt, der Hauptschneide eine besondere, ungerade Form zu geben, um das Schneidverhalten, beispielsweise die Schneidenschärfe oder die Stabilität der Schneide zu beeinflussen.

### Aufgabe der Erfindung

Ausgehend von dem eingangs dargestellten Stand der Technik liegt der Erfindung die Aufgabe zu Grunde, einen biegesteifen Bohrer zu schaffen, der zugleich spanbrechend wirkt und insbesondere geeignet ist, von Haus aus langspanendes Material mit kurzen Spänen zu zerspanen.

### Erfindungsmäßiger Lösungsgedanke

Diese Aufgabe wird bei einem Bohrer gemäß dem Anspruch 1 gelöst. Ausgehend von der bekannten Tatsache, dass die Verwendung einer bezogen auf die Mittellängsachse des Bohrers geraden Spannut die Steifigkeit des Bohrers erhöht, kombiniert die Erfindung einen solchen Bohrer mit einer geraden Spannut erstmals mit einer nicht geraden Schneide. Die Erfindung macht sich dabei die Erkenntnis zu Nutze, dass bereits die Verwendung einer bogenförmigen Hauptschneide dazu führt, dass der Span in die gerade Spannut hinein verdreht wird, der Span also bereits durch die ungerade Ausgestaltung der Schneide eine Richtungsänderung erfährt, die dazu führt, dass der Span in der Nut schließlich gebrochen wird. Durch die Verwendung der ungeraden Schneiden wird also die Spanformung beeinflusst und in die gewollte Richtung unterstützt. Darüber hinaus erhöht sich die Torsionssteifigkeit und die Biegefestigkeit des Bohrers durch einen Bohrerquerschnitt mit gebogenen Schneiden.

Grundsätzlich unterscheidet die Erfindung eine Ausgestaltung des Bohrers mit konvex gebogener Hauptschneide einerseits und mit konkav gebogener Hauptschneide andererseits.

Die Ausgestaltung mit konvex gebogener Hauptschneide zieht eine eher geschützte Ausgestaltung der Schneidenecke nach sich. Die Schneide ist damit sehr verschleißfest. Vorteilhaft ist es in weiterer Ausgestaltung auch, den Nutgrund der Spannut der Bogenform der Hauptschneide anzupassen. So ist in einer Ausführungsform der Erfindung vorgesehen, den Nutgrund im Anschluss an die konvex gebogene Hauptschneide konkav auszuformen. Hierdurch wird ein gewünschter positiver Spanwinkel erzeugt. Aus einem derartigen positiven Spanwinkel resultiert eine so genannte "scharfe Schneide". Diese eignet sich insbesondere zur Zerspanung weicher Werkstoffe.

Darüber hinaus ist die Ausbildung des Nutgrundes weiter verändert. Die Spannut des Bohrers ist in zwei Bereiche aufgeteilt, nämlich bei konvex gebogener Hauptschneide in einen sich daran anschließenden konvex ausgebildeten Bereich des Nutgrundes, welcher in einen daran anschließenden konkav ausgebildeten Bereich des Nutgrundes mündet. Durch diese Veränderung der Form des Nutgrundes wird auch die Abflussrichtung der Späne geändert, so dass das Bruchverhalten der Späne über die Spanabflussstrecke in der Spannut durch die Ausgestaltung des Nutgrundes beeinflusst werden kann. Zugleich verändert sich auch die Nebenschneide des Bohrers. Mit der konvexen Ausgestaltung des Nutgrundes geht eine konvexe Ausgestaltung der Bohrernebenschneide einher. Analog gilt dies für die konkave Ausbildung von Nutgrund und Bohrernebenschneide. In bevorzugter Ausgestaltung sind die beiden die Spannut des Bohrers bildenden Bereiche gleich lang. An den konvex ausgebildeten Bereich des Nutgrundes schließt sich also ein ebenso langer Bereich mit konkav ausgebildetem Nutgrund an.

Bei der zweiten Ausführungsform ist die Hauptschneide konkav gebogen. Im Bereich der besonders belasteten Schneidenecke ist diese konkav gebogene Hauptschneide besonders aggressiv, was eine besonders hohe Zerspanungsleistung nach sich zieht. Dem gegenüber ist die Schneidenecke jedoch sehr exponiert und somit verschleißanfällig.

Auch bei dieser Ausführungsform ist der konkav gebogenen Hauptschneide eine Spannut mit konkav ausgebildetem Nutgrund zugeordnet. Zur Schaffung einer wechselnden konkaven und konvexen Nebenschneide und zur Schaffung von sich verändernden Spannutbereichen ist es wiederum vorgesehen, den sich an die Hauptschneide anschließenden konkav ausgebildeten Bereich des Nutgrundes durch einen sich daran wiederum anschließenden Bereich mit konvex ausgebildetem Nutgrund zu ergänzen. Auch bei dieser Ausgestaltung ist es wiederum vorteilhaft, die beiden Spannutbereiche gleich lang auszugestalten. Der konkav ausgebildete Bereich des Nutgrundes ist dann also ebenso lang wie der Bereich mit konvex ausgebildetem Nutgrund.

Bei der konkav ausgebildeten Hauptschneide besteht zudem die Tendenz, den Span in die Nut gewissermaßen hinein zu ziehen, so dass der Span sehr schnell von der Wirkstelle der Hauptschneide weg gefördert wird.

Die geraden Spannuten gemäß der Erfindung können eine positive Steigung von bis zu 5° aufweisen. Ebenso ist es möglich, die geraden Spannuten so zu gestalten, dass sie eine negative Steigung von bis zu -5° aufweisen. Die Spannuten mit positiver oder negativer Steigung weisen also über ihren Verlauf eine gewisse Neigung auf.

Im Bereich der Bohrerspitze bzw. der Bohrerstim ist es sowohl möglich, eine Ausspitzung als auch einen Kreuzanschliff bzw. Vier-Flächen-Anschliff vorzusehen. Auch die Schneidenecken des Bohrers können einen Eckenradius, also eine Verrundung oder eine Eckenfase zur Unterstützung der Schneidenecken aufweisen. Eine scharfe unverrundete Eckenform eignet sich zum Schnitt beispielsweise von Aluminiumwerkstoffen. Eine verrundete Eckenform hingegen eignet sich beispielsweise zum Zerspanen von Gußwerkstoffen. Auch ist es mit der Erfindung möglich, die Hauptschneiden und auch die Nebenschneiden unverrundet oder verrundet auszugestalten oder ihre Stabilität durch die Anbringung einer Fase zu erhöhen.

Schließlich ist es auch möglich, mehr als zwei hinsichtlich der Ausbildung des Nutgrundes unterschiedlich gestaltete Bereiche in der Spannut vorzusehen. Es ist weiterhin vorgesehen, zunächst im Anschluss an die konvexe oder konkave Schneide einen Bereich mit konvexer oder konkaver Nutgrundgestaltung anzuschließen, um an diesen einen Bereich mit geradem Nutgrund anzuschließen, an welchen sich wiederum ein Bereich mit konvex oder konkav ausgestalteten Nutgrund anschließen kann.

Mit der Erfindung ist es erstmals möglich, einen gerade genuteten Bohrer zur Zerspanung langspanender und/oder höher festerer Werksstoffe einzusetzen.

### Die Ausführungsbeispiele:

- Fig. 1: eine perspektivische Ansicht der Bohrerspitze eines Bohrers mit konvex gebogener Hauptschneide,

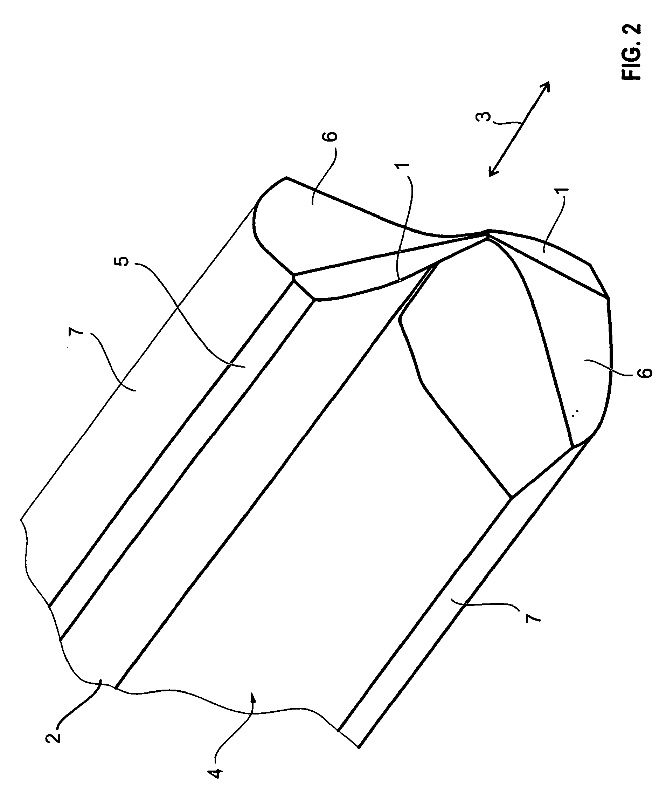

- Fig. 2: eine weitere perspektivische Ansicht des in Fig. 1 dargestellten Bohrerabschnitts,
- Fig. 3: eine Seitenansicht des in Fig. 1 und Fig. 2 dargestellten Bohrers,
- Fig. 4: eine Vorderansicht gemäß dem Pfeil IV in Fig. 3
- Fig. 5: den Schnitt V-V in Fig. 3
- Fig. 6: die Draufsicht auf die Bohrerspitze gemäß Fig. 4 mit der möglichen Form und Position der zugeordneten Schleifscheibe,
- Fig. 7: eine Seitenansicht eines Bohrers mit konvex gebogener Schneide, sich daran anschließendem Bereich der Spannut mit konvex ausgebildetem Nutgrund und einem sich daran anschließenden Bereich des Nutgrundes mit konkaver Ausbildung,
- Fig. 8: Schnitt VIII-VIII aus Fig. 7,
- Fig. 9: Schnitt IX-IX aus Fig. 7,
- Fig. 10: eine perspektivische Ansicht der Bohrerspitze eines Bohrers mit konkav gebogener Hauptschneide,

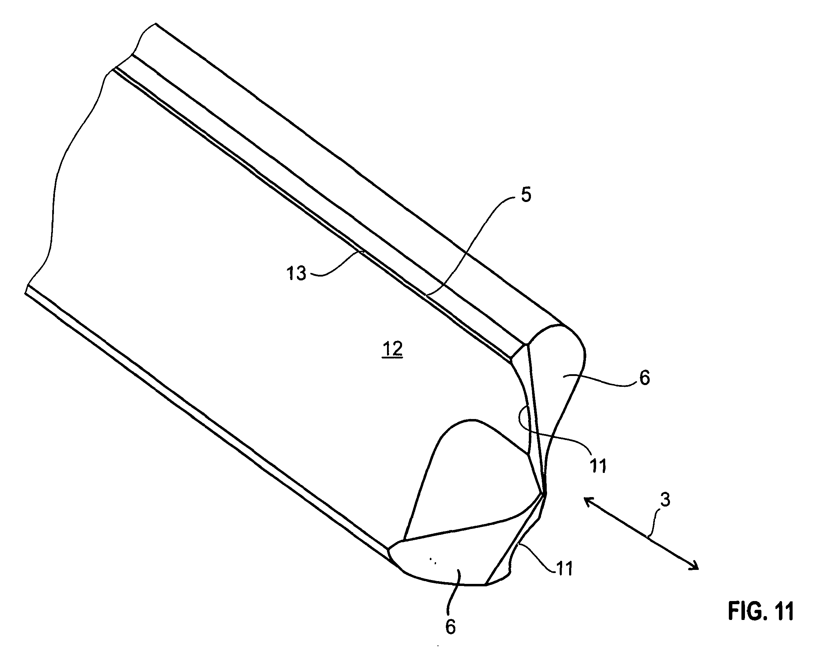

- Fig. 11: eine weitere perspektivische Ansicht des in Fig. 10 dargestellten Bohrerabschnitts,
- Fig. 12: eine Seitenansicht des in Fig. 10 und Fig. 11 dargestellten Bohrers,
- Fig. 13: eine Vorderansicht gemäß dem Pfeil XIII in Fig. 12,
- Fig. 14: den Schnitt XIV-XIV in Fig. 12,
- Fig. 15: die Draufsicht auf die Bohrerspitze gemäß Fig. 13 mit der möglichen Form und Position der zugeordneten Schleifscheibe,
- Fig. 16: eine Seitenansicht eines Bohrers mit konkav gebogener Schneide, sich daran anschließendem Bereich der Spannut mit konkav ausgebildetem Nutgrund und einem sich daran anschließenden Bereich des Nutgrundes mit konvexer Ausbildung, Fig. 17 Schnitt XVII-XVII aus Fig. 16,
- Fig. 18: Schnitt XVIII-XVIII aus Fig. 16.

### Beschreibung der Ausführungsbeispiele

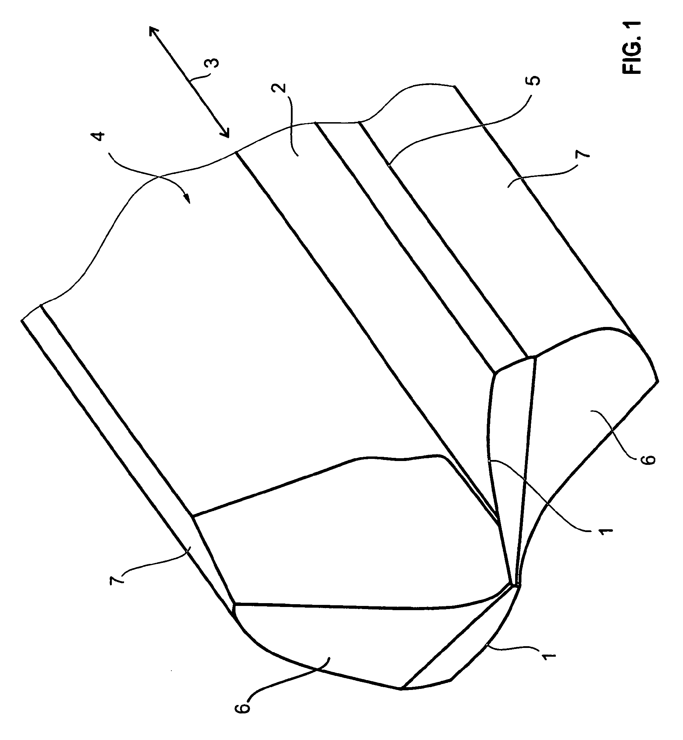

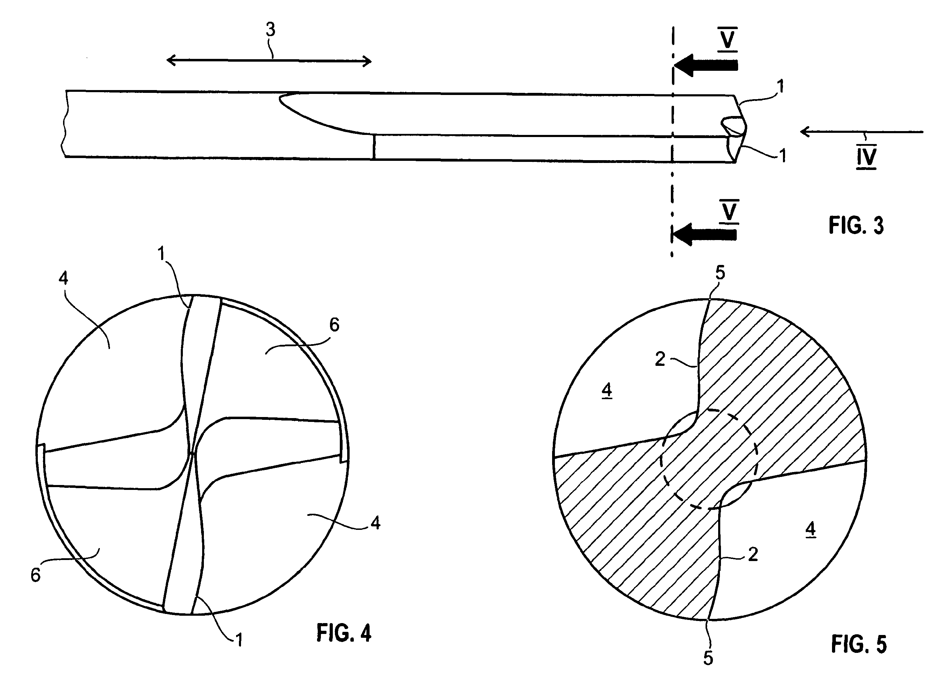

Fig. 1 zeigt die - wie bei Bohrern üblich - paarweise ausgebildete konvexe Hauptschneide 1 und den sich an die konvexen Hauptschneiden 1 anschließenden konvexen Nutgrund 2. Der konvex ausgebildete Nutgrund 2 ist Bestandteil der sich in mit Längsrichtung 3 des Bohrers erstreckenden, geraden Spannut 4. Die Spannut 4 wird an ihrer Umfangsfläche begrenzt von der Nebenschneide 5. Des Weiteren grenzt jeweils an die konvexe Hauptschneide 1 eine Hauptfreifläche 6, während an die Nebenschneiden 5 die Nebenfreiflächen 7 angrenzen. Besonders gut erkennbar ist die konvexe Ausbildung der konvexen Hauptschneiden 1 in der Vorderansicht der Fig. 4. Aus der Darstellung der Fig. 4 ist auch erkennbar, dass die konvexe Ausbildung der konvexen Hauptschneiden 1 eine gewisse Umlenkung der Späne nach sich zieht, so dass die Späne mit einem gewissen Drall in die Spannuten 4 gleichsam hineingezogen werden.

Aus der Darstellung der Fig. 5 ist erkennbar, dass auch die sich an die Nebenschneiden 5 anschließenden Bereiche der Spannuten 4 jeweils als konvexer Nutgrund 2 ausgestaltet sind.

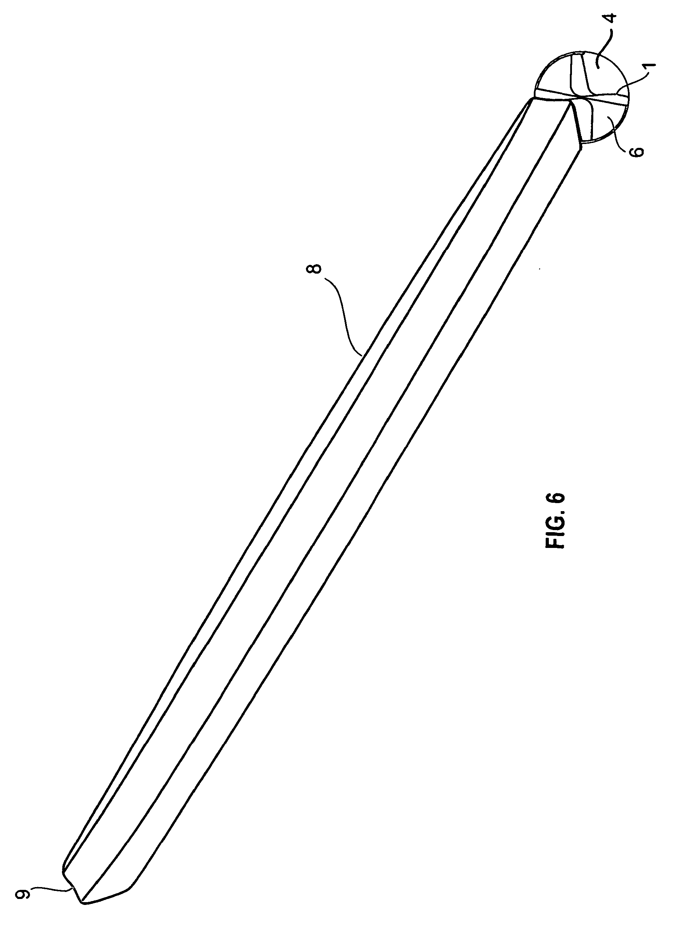

Fig. 6 zeigt schließlich eine als Formwerkzeug ausgestaltete Schleifscheibe 8. Diese Schleifscheibe 8 greift schräg an der konvexen Hauptschneide 1 an und weist eine zur konvexen Gestalt der konvexen Hauptschneide 1 komplementär ausgestaltete konkave Bearbeitungsfläche 9 auf ihrer Mantelfläche auf.

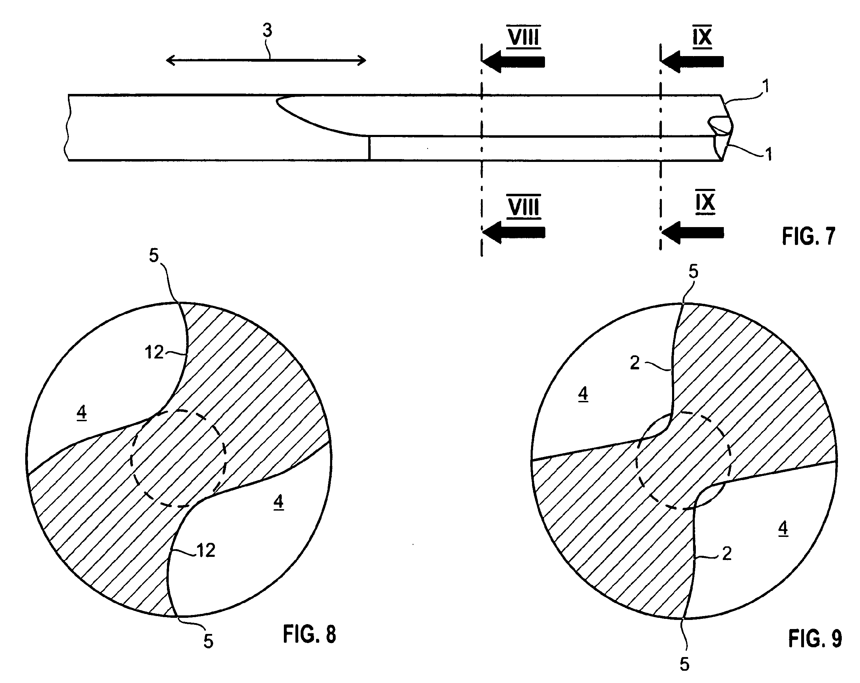

Fig. 9 zeigt den erfindungsmäßigen Bohrer mit konvexer Hauptschneide 1. An die konvexen Hauptschneiden 1 schließt sich der in Fig. 9 im Querschnitt dargestellte Bereich der Spannuten 4 mit konvexem Nutgrund 2 an. In Mittellängsrichtung 3 schließt sich von den konvexen Hauptschneiden 1 her gesehen an den Bereich mit konvexem Nutgrund 2 ein weiterer Bereich mit konkavem Nutgrund 12 an. Ein Schnitt durch den Bereich mit konkavem Nutgrund ist als Schnitt VIII-VIII in Fig. 7 bzw. in Fig. 8 gezeigt. Aus der Darstellung der Fig. 8 ist erkennbar, dass die Nebenschneiden 5 im Bereich mit dem konkaven Nutgrund 12 der Spannut 4 einen positiven Spanwinkel aufweisen.

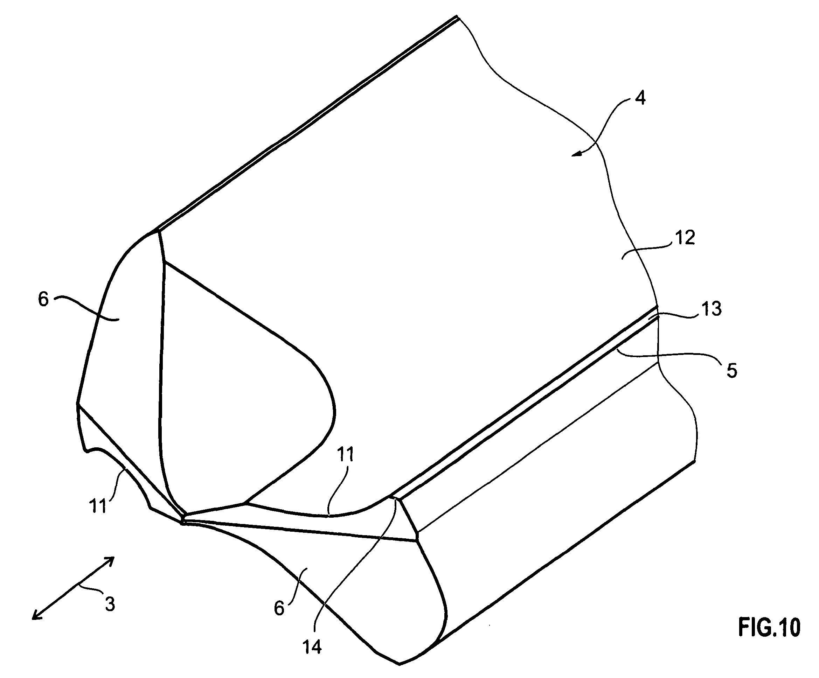

Gemäß Fig. 10 weist der Bohrer ein aus zwei konkaven Hauptschneiden 11 gebildetes Hauptschneidenpaar auf. Am Bohrerumfang sind die konkaven Hauptschneiden 11 jeweils von einer Schneidenfase 13 begrenzt. Diese Schneidenfase dient zur Stabilisierung der sehr spitz ausgestalteten und damit aggressiven Schneidenecke 14 einerseits und der ebenfalls aggressiv schneidenden Nebenschneiden 5 andererseits.

An die konkave Hauptschneide 11 schließt sich in mit Längsrichtung 3 des Bohrers jeweils der konkave Nutgrund 12, also der konkav ausgebildete Bereich der Spannut 4 an.

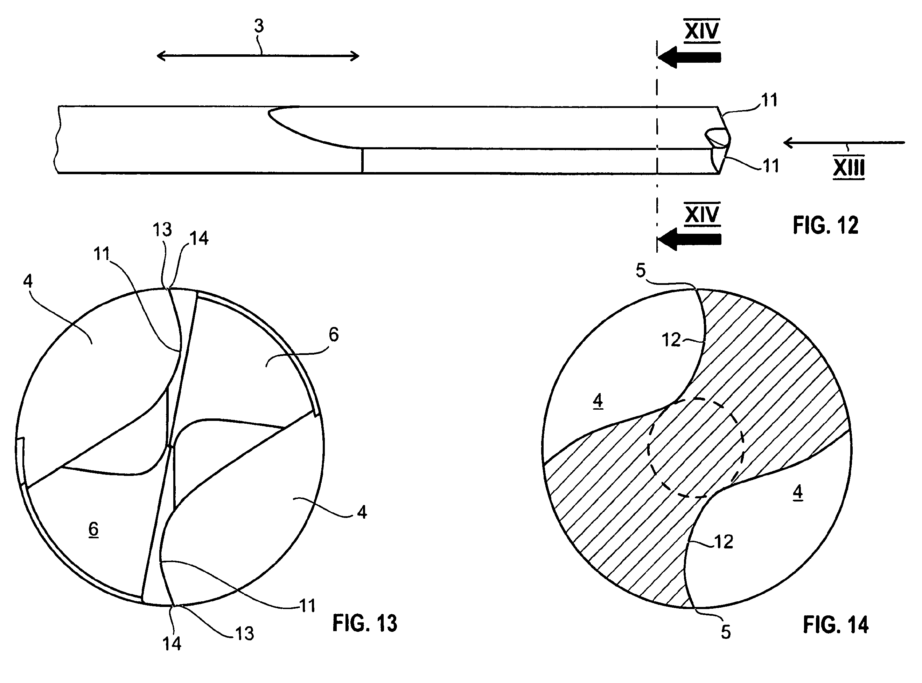

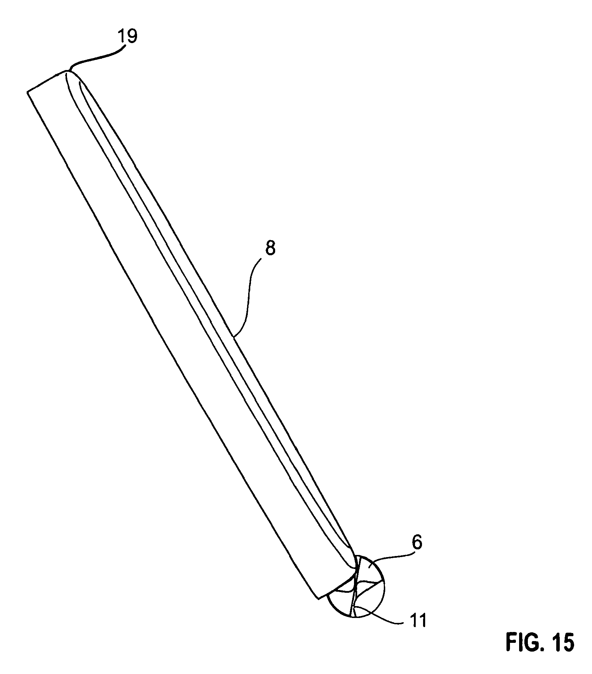

Aus der Darstellung der Fig. 12, Fig. 13 und Fig. 14 ist zunächst wieder der konkave Verlauf der konkaven Hauptschneiden 11 erkennbar sowie der konkave Verlauf des konkaven Nutgrundes 12. Insbesondere der Schnitt IX-IX in Fig. 12 bzw. die den Schnitt zeigende Fig. 14 zeigen den konkaven Nutgrund 12 und die daraus resultierende aggressive Nebenschneide 5 mit positivem Spanwinkel. Aus der Darstellung der Fig. 15 ist wiederum eine an der Bohrerspitze schräg angreifende Schleifscheibe 8 zur Bearbeitung der konkaven Hauptschneide 11 erkennbar. Diese Schleifscheibe 8 weist einen zur Konkavität der konkaven Hauptschneide 11 komplementär ausgebildete konvexe Bearbeitungsfläche 19 am Schleifscheibenumfang auf. Die konvexe Bearbeitungsfläche 19 ist von einem ausgerundeten Eckenbereich der Schleifscheibe 8 gebildet.

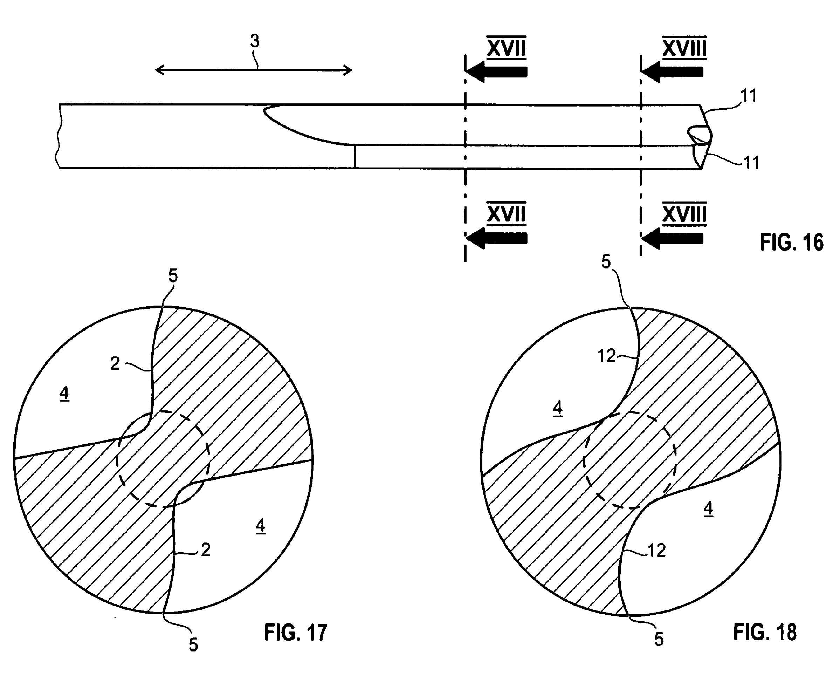

Die Fig. 16, 17 und 18 zeigen schließlich ein kombiniertes Werkzeug mit zunächst konkaver Hauptschneide 11, sich daran anschließendem konkavem Nutgrund 12 innerhalb der Spannut 4 und einem sich in Mittellängsrichtung 3 von den konkaven Hauptschneiden 11 her gesehen anschließenden Bereich mit konvexem Nutgrund 2. Aus der Darstellung der Fig. 17 ist in diesem Zusammenhang erkennbar, dass der im Schnitt XVII-XVII bzw. in Fig. 17 dargestellte Bereich mit konvexem Nutgrund 2 einen negativen Spanwinkel aufweist.

Zusammengefasst zieht die Verwendung eines aus konvexen Hauptschneiden 1 zusammengesetzten Hauptschneidenpaars und eines sich daran in Mittellängsrichtung 3 des Werkzeugs anschließenden Bereichs einer Spannut 4 mit konvexem Nutgrund 2 den Vorteil nach sich, dass die Schneidenecken des Werkzeugs widerstandsfähiger sind. Auf Grund dieser höheren Widerstandsfähigkeit können zähere Materialien gespant werden. Auch begünstigt dies die Formung und Abfuhr der Späne.

Die Verwendung eines Werkzeugs mit einem aus konkaven Hauptschneiden 11 bestehenden Hauptschneidenpaar und einem sich daran in Mittellängsrichtung 3 des Werkzeugs anschließenden Bereich der Spannuten 4 mit konkavem Nutgrund 12 vergrößert das Volumen der Spannuten 4 und schafft so einen größeren Raum zur Spanabfuhr. Die Schneidenecken 14 sind hierbei ebenso wie die Nebenschneiden 5 deutlich aggressiver. Auf diese Weise lassen sich sprödere Werkstoffe bzw. Werkstoffe mit hoher Festigkeit, die jedoch leicht brechen, leichter bearbeiten.

## Patentansprüche

1. Bohrer mit einer geraden Spannut (4), **dadurch gekennzeichnet dass** der Bohrer eine konvex gebogene Hauptschneide (1) mit einem sich an die Hauptschneiden (1) anschließenden konvex ausgebildeten Nutgrund (2) und einem sich an den konvex ausgebildeten Bereich des Nutgrundes (2) anschließenden konkav ausgebildeten Bereich des Nutgrundes (12) oder eine konkav gebogene Hauptschneide (11) mit einem sich an die Hauptschneide anschließenden konkav ausgebildeten Nutgrund (12) mit einem sich an den konkav ausgebildeten Bereich des Nutgrundes (12) anschließenden konvex ausgebildeten Bereich des Nutgrundes (2) aufweist.

2. Bohrer nach Anspruch 1,
**dadurch gekennzeichnet**
**dass** der konvex ausgebildete Bereich des Nutgrundes (2) und der konkav ausgebildete Bereich des Nutgrundes (12)jeweils die gleiche Länge aufweisen.

3. Bohrer nach Anspruch 1 oder Anspruch 2,
**dadurch gekennzeichnet**
**dass** sich beim Bohrer mit konvex gebogener Hauptschneide und anschließendem konvex ausgebildeten Bereich des Nutgrundes (2) an den konvex ausgebildeten Nutgrund (2) ein Bereich mit geradem Nutgrund anschließt, an welchen sich wiederum ein konkav ausgebildeter Bereich des Nutgrundes (12) anschließt bzw. dass beim Bohrer mit konkav gebogener Hauptschneide und sich anschließendem konkav ausgebildeten Bereich des Nutgrundes (12) ein Bereich mit geradem Nutgrund anschließt, an welchen sich ein Bereich mit konvex ausgebildetem Nutgrund (2) anschließt.

4. Bohrer nach einem der Ansprüche 1 bis 3,
**dadurch gekennzeichnet**
**dass** die Spannuten eine positive Steigung von bis zu +5° aufweisen.

5. Bohrer nach einem der Ansprüche 1 bis 3,
**dadurch gekennzeichnet**
**dass** die Spannuten eine negative Steigung von bis zu -5° aufweisen.

## Claims

1. Drill comprising a straight flute (4), **characterized in that** the drill has a convexly curved main cutting edge (1) having a convexly designed flute root (2) adjoining the main cutting edge (1) and a concavely designed region of the flute root (12) adjoining the convexly designed region of the flute root (2), or a concavely curved main cutting edge (11) having a concavely designed flute root (12) adjoining the main cutting edge and a convexly designed region of the flute root (2) adjoining the concavely designed region of the flute root (12).

2. Drill according to Claim 1, **characterized in that** the convexly designed region of the flute root (2) and the concavely designed region of the flute root (12) each have the same length.

3. Drill according to Claim 1 or Claim 2, **characterized in that**, in the drill having a convexly curved main cutting edge and adjoining convexly designed region of the flute root (2), a region having a straight flute root adjoins the convexly designed flute root (2), adjoining which straight flute root in turn is a concavely designed region of the flute root (12), or **in that**, in the drill having a concavely curved main cutting edge and adjoining concavely designed region of the flute root (12), this is followed by a region having a straight flute root, adjoining which is a region having a convexly designed flute root (2).

4. Drill according to one of Claims 1 to 3, **characterized in that** the flutes have a positive slope of up to + 5°.

5. Drill according to one of Claims 1 to 3, **characterized in that** the flutes have a negative slope of up to - 5°.

## Revendications

1. Foret avec une rainure à copeaux rectiligne (4), **caractérisé en ce que** le foret présente un tranchant principal à courbure convexe (1) avec un fond de rainure (2) de forme convexe se raccordant au tranchant principal (1) et une région de forme concave du fond de rainure (12) se raccordant à la région de forme convexe du fond de rainure (2) ou un tranchant principal à courbure concave (11) avec un fond de rainure (12) de forme concave se raccordant au tranchant principal avec une région du fond de rainure (2) de forme convexe se raccordant à la région du fond de rainure (12) de forme concave.

2. Foret selon la revendication 1, **caractérisé en ce que** la région de forme convexe du fond de rainure (2) et la région de forme concave du fond de rainure (12) présentent chaque fois la même longueur.

3. Foret selon la revendication 1 ou la revendication 2, **caractérisé en ce que**, dans le foret avec un tranchant principal à courbure convexe et une région de forme convexe du fond de rainure (2) qui s'y raccorde, il se raccorde au fond de rainure de forme convexe (2) une région avec un fond de rainure rectiligne, auquel se raccorde de nouveau une région de forme concave du fond de rainure (12) ou **en ce que**, dans le foret avec un tranchant principal à courbure concave et une région de forme concave du fond de rainure (12) qui s'y raccorde, il se raccorde une région avec un fond de rainure rectiligne, auquel se raccorde une région de forme convexe du fond de rainure (2).

4. Foret selon l'une quelconque des revendications 1 à 3, **caractérisé en ce que** les rainures à copeaux présentent une pente positive allant jusque +5°.

5. Foret selon l'une quelconque des revendications 1 à 3, **caractérisé en ce que** les rainures à copeaux présentent une pente négative allant jusque -5°.
